# EUROPEAN PATENT APPLICATION

(11) **EP 3 147 144 A1**
(43) Date of publication of application: **29.03.2017**
(21) Application number: 15203275.1
(22) Date of filing: 31.12.2015
(51) Int. Cl.: B60H 1/00, B60H 1/32, F25B 19/00, F25D 3/10

(54) **HEAT EXCHANGE APPARATUS AND CORRESPONDING METHOD**

(30) Priority: 25.09.2015 GB 201517004
(71) Applicant: Linde Aktiengesellschaft, 80331 München (DE)
(72) Inventor: ALLWOOD, Michael, Bramley, Rotherham District, South Yorkshire S66 3RR (GB)
(74) Representative: Hofmann, Andreas

(57) **Abstract**

A heat exchange apparatus (10) is proposed, comprising:
- a housing (24) including an inlet, an outlet downstream of the inlet, and a space (34) between the inlet and the outlet;
- a heat exchange coil (36) disposed at the space (34) and through which a cryogen flows for evaporation;
- at least one wall (42) mounted in the space (34) to separate said space into a pair of chambers (48, 50, 46), each one of said chambers separate and discrete from the other one of said pair; and
- a first fan (54) disposed to coact with one of said pair of chambers (48, 50, 46) to provide air flow (60) from the inlet over the heat exchange coil (36) to the outlet.

A related method is also provided.

## Description

### Technical field of the present invention

The present invention relates to heat exchangers used to indirectly chill and refrigerate for example intermodal shipping containers, and related processes therefore.

### Technological background of the present invention

Known apparatus and methods vaporize nitrogen (N₂) inside a heat exchanger and therefore rely upon a flow of air over the heat exchanger to provide enough heat to allow for the vaporization. Air is moved over the heat exchanger, or rather its coils, by at least one and for many applications a plurality of axial fans.

During the course of operation with known apparatus, liquid nitrogen (LIN) is introduced into the heat exchanger coil at varying rates subject to the demand of the refrigeration system for which the heat exchanger is being used. The "demand" of the refrigeration system influences the rate that the LIN is introduced into the heat exchanger, and such rate is influenced by the heat energy of the cargo to be chilled or refrigerated, ambient temperatures in the shipping container and operational profile of the heat exchanger.

Most intermodal or transit refrigeration apparatus systems use N₂, LIN or other cryogen, and electrical energy to operate the axial fans which move the air over the heat exchanger coil. Such apparatus/systems draw electrical energy from the shipping vehicle or platform, such as a truck, barge, etc., which energy is stored in batteries dedicated to provide the electrical power for the apparatus when the engine of the transport vehicle is not in operation. During refrigeration operations, and at maximum N₂ throughput at the heat exchanger, the fans must also provide maximum air flow over the coil in order to vaporize the N₂.

However, when the nitrogen flow is reduced to not more than one percent or is stopped altogether, the known evaporator/vaporizer systems continue to provide hundred percent air flow over the heat exchanger coil. This results in a waste of electrical energy produced and/or stored, an increased heat load into the cargo area, and a requirement to have larger and therefore heavier batteries to power the system.

Unfortunately, it is not possible to reduce the speed of the fans, because a reduction in revolutions per minute (rpm) will correspondingly result in a reduction of air pressure that could cause the heat exchanger to become blocked with ice formation. Additionally, when one fan of the system fails, a reduction in air flow and pressure occurs across the entire heat exchanger coil.

For known heat exchange systems, these deficiencies are detrimental to the cost-effective operation of the systems during storage and transit of the cargo to be chilled or refrigerated.

### Disclosure of the present invention: object, solution, advantages

Starting from the disadvantages and shortcomings as described above as well as taking the prior art as discussed into account, an object of the present invention is to overcome the limitations and problems that earlier apparatus and methods have experienced.

This object is accomplished by an apparatus comprising the features of claim 1 as well as by a method comprising the features of claim 8. Advantageous embodiments and expedient improvements of the present invention are disclosed in the respective dependent claims.

The present invention basically provides for an air flow management heat exchanger apparatus and for a corresponding method; in particular, there is provided a cryogen evaporator for air flow management, in particular a nitrogen evaporator for air flow management.

The air flow management heat exchanger apparatus according to the present invention includes a housing with an inlet, an outlet downstream of the inlet, and a space between the inlet and the outlet; a heat exchange coil disposed at the space and through which a cryogen flows for evaporation; at least one wall mounted in the space to separate said space into a pair of chambers, each one of said pair of chambers separate and discrete from the other one of said pair; and a first fan disposed to coact with one of said pair of chambers to provide air flow from the inlet over the heat exchange coil to the outlet.

### The at least one wall

- may preferably extend continuously along the space from said inlet to said heat exchange coil, and/or
- may preferably comprise a portion of the heat exchange coil, wherein said cryogen may flow through said portion.

According to an advantageous embodiment of the present invention, the housing may include a sidewall constructed and arranged to support the first fan.

According to an expedient embodiment of the present invention, the sidewall may be constructed to be removably mounted to the housing at the inlet.

The apparatus may favourably comprise a second fan disposed to coact with another of said chambers to provide another air flow from the inlet over the heat exchange coil to the outlet, said another air flow separate and discrete from the air flow.

The first and second fans may expediently be operable concurrently or optionally at separately different intervals of time.

According to a favoured embodiment of the present invention, the apparatus may further include a discharge outlet having an end in fluid communication with the heat exchange coil and an opposed end in fluid communication with atmosphere external to the housing.

There is also provided a method of air flow management for a heat exchanger, which includes providing a space with a plurality of flow paths to a heat exchange coil through which cryogen passes; separating the space such that the plurality of flow paths are separate and discrete from each other, and are not in fluid communication with each other; moving an air flow in each of the plurality of flow paths to contact the heat exchange coil; vaporizing/evaporating the cryogen in the heat exchange coil upon contact with the air flow; and exhausting a cooler air flow from heat exchange coil.

According to a preferred embodiment of the present invention, the separating the space may include extending a portion of the heat exchange coil along the space for providing the plurality of flow paths.

According to an advantageous embodiment of the present invention, the moving the air flow may occur concurrently in the plurality of flow paths.

According to an expedient embodiment of the present invention, the moving the air flow may correspond to the vaporizing of the cryogen needed for exhausting the cooler air flow.

According to a favoured embodiment of the present invention, the exhausting the cooler air flow may be into a container for perishable goods.

In an advantageous manner, the method may further comprise discharging vaporized cryogen downstream from the heat exchange coil.

According to a preferred embodiment of the present invention, the discharging may be to atmosphere external to the space.

According to an advantageous embodiment of the present invention, the method may further include recirculating the cryogen not having been vaporized to the heat exchange coil.

The apparatus and method according to the present invention can also each include the cryogen being a cryogenic substance selected from the group consisting of liquid nitrogen (LIN), liquefied natural gas (LNG), argon (Ar), and carbon dioxide (CO₂).

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 as well as on claim 8; further improvements, features and advantages of the present invention are explained below in more detail with reference to particular and preferred embodiments by way of nonlimiting example and to the appended drawing figures taken in conjunction with the following description of exemplary embodiments, of which:
- FIG. 1: shows a perspective view of an air flow management heat exchanger apparatus embodiment of the present invention mounted for in transit refrigeration (ITR), said embodiment working according to the method of the present invention;
- FIG. 2: shows a side view of the air flow management heat exchanger apparatus embodiment of FIG. 1;
- FIG. 3: shows a more detailed schematic view of the air flow management heat exchanger apparatus embodiment of FIG. 1 and FIG. 2;
- FIG. 4: shows a detailed schematic view of a first additional embodiment of the heat exchanger apparatus embodiment of the present invention, said embodiment working according to the method of the present invention; and
- FIG. 5: shows a detailed schematic view of a second additional embodiment of the heat exchanger apparatus embodiment of the present invention, said embodiment working according to the method of the present invention.

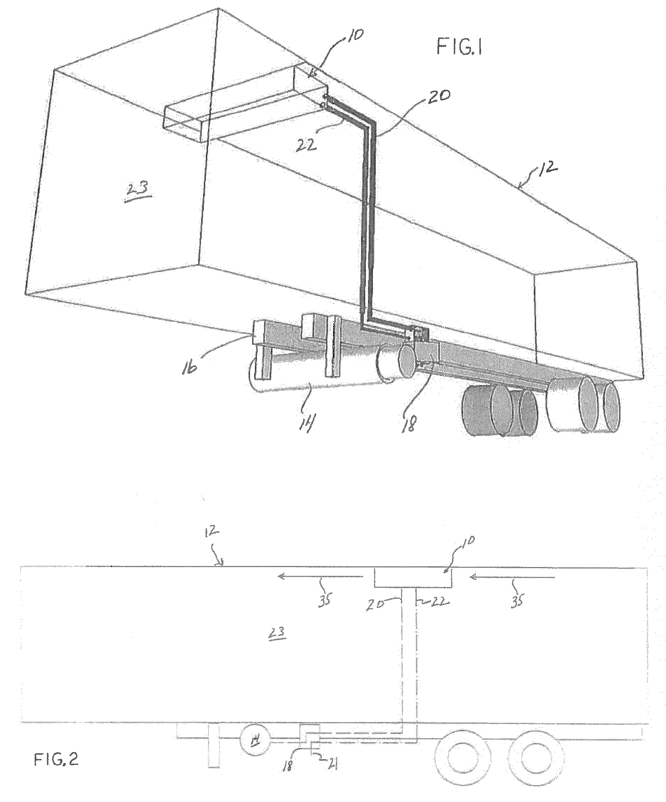

In the appended drawing figures, like equipment is labelled with the same reference numerals throughout the description of FIG. 1 to FIG. 5.

### Detailed description of the drawings; best way of embodying the present invention

Before explaining the inventive embodiments in detail, it is to be understood that the invention is not limited in its application to the details of construction and arrangement of parts illustrated in the accompanying drawings, since the invention is capable of other embodiments and being practiced or carried out in various ways. Also, it is to be understood that the phraseology or terminology employed herein is for the purpose of description and not of limitation.

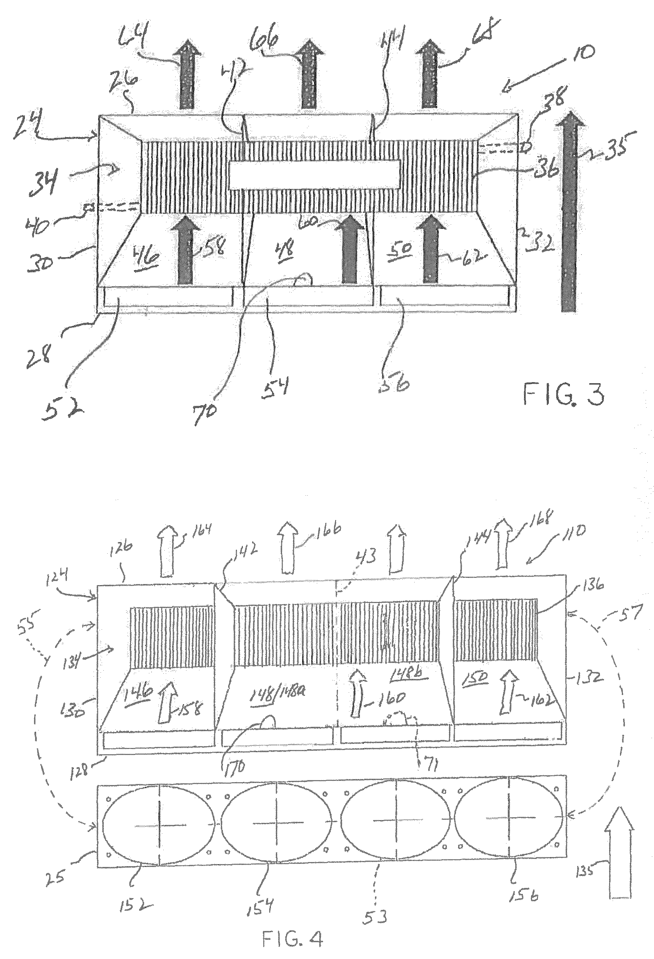

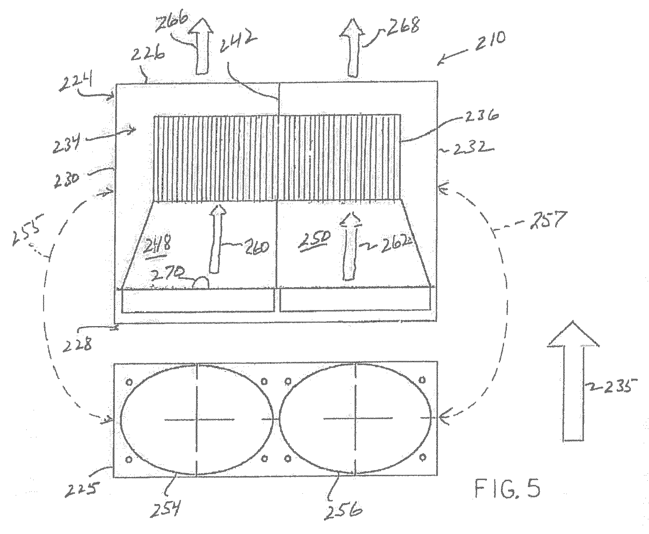

In order to avoid unnecessary repetitions and unless otherwise stated, the above-mentioned as well as the below-mentioned explanations regarding the features, characteristics and advantages of the respective embodiments relate
- to the apparatus embodiment 10 according to FIG. 1 to FIG. 3 of the present invention as well as
- to the apparatus embodiment 110 according to FIG. 4 of the present invention as well as
- to the apparatus embodiment 210 according to FIG. 5 of the present invention.

The air flow management heat exchanger apparatus embodiment of the present invention is shown generally at 10 in FIG. 1 and in FIG. 2, such apparatus being mounted, removably or otherwise, to a shipping container 12 for intermodal transportation, including in-transit refrigeration (ITR). The container 12 can be transported by truck, barge, ship or rail, for example.

A cryogenic substance, such as for example liquid nitrogen (LIN), is contained in a tank 14 or vessel mounted to the container 12 or a carriage 16 therefore. Other cryogenic substances may be used such as for example liquefied natural gas (LNG), argon (Ar) and carbon dioxide (CO₂).

A controller 18 removes the pressurized LIN from the tank 14 and delivers the LIN through open-circuit piping 20, 22 to and from the apparatus 10. That is, the pipe 20 is in fluid communication with the tank 14 and the controller 18 and thereafter to an inlet of the apparatus 10, while the pipe 22 is connected to an outlet of the apparatus back through the controller 18 and into the tank 14. Another embodiment may include a pump with the controller 18 for situations where pressure in the tank 14 becomes insufficient to move the LIN through the pipes 20, 22.

In effect, the pipe 20 is delivering cold LIN from the tank 14 to the apparatus 10 ("liquid in"), while the pipe 22 is conveying the vaporized N₂, now somewhat warmed, via the pipe 22 to be vented to atmosphere external to a space 23 of the container 12 ("gas out"). The pipe 22 is provided with an exhaust outlet 21 for venting the vapour to the atmosphere.

Any LIN which has not vaporized can be recirculated by the controller to the tank 14. Such an arrangement provides the open-loop system for the LIN between the apparatus 10, the tank 14, the controller 18 and the N₂ exhaust outlet 21 to cool or chill the space 23 in the container 12. The space 23 may contain perishable goods such as for example food products, pharmaceuticals, biological substances, and the like.

Referring to FIG. 3, an embodiment of the apparatus 10 of the present invention is shown in more detail. The apparatus 10 includes a housing 24 that may be constructed from metals such as for example stainless steel, or aluminum, or of composite materials and plastics. The housing 24 includes a top 26, a bottom 28, and opposed sidewalls 30, 32, all of which define an interior space 34. Air flow in the container 12 external to the apparatus 10 is shown generally by arrow 35 (cf. also FIG. 2).

A heat exchange coil 36 is disposed at the interior space 34 and includes an inlet 38 in fluid communication with the pipe 20 (shown in FIG. 1 and in FIG. 2) and an outlet 40 in fluid communication with the pipe 22. The housing 24 may be jacketed or otherwise provided with thermal insulation to provide for the most efficient operation of the heat exchange coil 36.

In the embodiment shown in FIG. 3, there is included a plurality of walls 42, 44 disposed at the interior space 34 to segregate the space into a plurality of chambers 46, 48, 50 (collectively the "chambers 46 to 50"). The chamber 48 may also be referred to herein as the "primary chamber" or "primary plenum chamber". Each one of the chambers provides a flow path therethrough, as is described below. Accordingly, there will be a plurality of flowpaths at the interior space 34.

In the embodiment shown, each one of the walls 42, 44 extend along the interior space 34 from one end of same all the way up to and in contact with the heat exchange coil 36. In this manner of construction, there is no fluid communication between the chambers 46 to 50, because each one of the chambers 46 to 50 extends continuously from one end of the space 34 up to coil 36 for contact therewith.

A plurality of fans 52, 54, 56 (collectively the "fans 52 to 56") are mounted to provide an air flow corresponding to each one of the chambers 46 to 50. The fans may be axial fans or axial flow fans.

For example, the fan 52 is mounted to provide air flow 58 along a flow path through the chamber 46 and over the coil 36, the fan 54 is mounted to provide air flow 60 along a flow path through the chamber 48 and over the coil 36, and the fan 56 is mounted to provide air flow 62 along a flow path through the chamber 50 and over the coil 36.

The air flows 58 to 62 are cooled upon contact with the heat exchanger coil 36 resulting in cooled air flows 64, 66, 68, respectively (collectively the "cooled air flows 64 to 68") exhausted from the coil 36 to cool the space 23 of the shipping container 12. The air flows 58 to 62 move separate and discrete from each other.

The primary chamber 48 is also provided with a temperature probe 70 or sensor mounted proximate an intake side of the fan 54 near a forward most portion of the chamber 48 furthest from the heat exchange coil 36. However, it is understood that the temperature probe 70 can also be mounted proximate an intake side of the chambers 46, 50 as well.

In either instance, the probe 70 should be mounted upstream of or parallel to the fan 54, i. e. at a low pressure side of the fan 54, not downstream of the fan 54. Additionally, the probe 70 is mounted in the chamber that is considered the primary chamber. In FIG. 3, this would be the chamber 48. If, for example, the probe was mounted at the low pressure side of the fan 52, the chamber 46 would be the primary chamber.

The walls 42, 44 prevent the air flows 58 to 62 from comingling or communicating with each other, so that there is continuous air flow pressure in each of the separate chambers 46 to 50, and so that if one of the fans 52 to 56 should fail, the air flows 58 to 62 will not cross into other of the chambers 46 to 50 to short circuit the apparatus 10. The term "short circuit" as used herein is to describe the flow of air once it has passed through one of the fans 52 to 56 and thereafter exited or been exhausted from the housing 24 by any exit or outlet without first having passed over the heat exchange coil 36.

For example, if air drawn in through the fan 52 thereafter exits that housing 24 by any manner other than passing over the heat exchange coil 36, such as by exiting the housing 24 through the fan 54 which is inoperable, such a condition would be a short circuit of the air flow.

During standard operation of the apparatus 10, the fans 52 to 56 all operate at the same time, or are deactivated at the same time, commensurate with a flow rate of the cryogen flowing through the heat exchange coil 36.

The use of the chambers 46 to 50 and the corresponding air flows 58 to 62 will, in the event of a failure of one of the fans 52 to 56, prevent the air flow from short circuiting the heat exchange coil 36 by passing through the space of the inoperable fan. That is, air in a chamber having an inoperable fan will not be rerouted, redirected or drawn into a chamber having an inoperable fan.

It is also possible that fewer than all of the fans 52 to 56 will be operated concurrently. The fans 52 to 56 may be operable concurrently or separately at different intervals of time.

Two other exemplary embodiments of the apparatus constructed in accordance with the present invention are illustrated in FIG. 4 and in FIG. 5, respectively. Elements illustrated in FIG. 4 and in FIG. 5 which correspond to the elements described above with respect to FIG. 1 to FIG. 3 have been designated by reference numerals increased by 100 and 200, respectively. The embodiments of FIG. 4 and of FIG. 5 are designed for use in the same manner as the embodiment of FIG. 1 to FIG. 3 unless otherwise stated.

Referring to FIG. 4, the housing 124 of the apparatus 110 is shown with a wall 25 supporting the fans 152 to 156 removed from the housing 124. A similar wall is not shown in FIG. 3 for purposes of clarity in that figure. Each one of the fans 152 to 156 is mounted to the wall 25 for registration with a corresponding one of the chambers 146 to 150 to provide the air flow 158 to 162 therethrough. The wall 25 is removably mountable to the opposed sidewalls 130, 132 at an inlet to the housing 124.

The embodiment of FIG. 4 may also include an additional wall 43 to separate or segregate the primary chamber 148 into a plurality of chambers 148a, 148b. Accordingly, there would be provided an additional fan 53 at the wall 25 such that the fan 154 is in registration with the chamber 148a, while the fan 53 is in registration with the chamber 148b. As mentioned above, the wall 25 may be removably mountable to the opposed sidewalls 130, 132, and such disposition of coaction is represented by the broken lines 55, 57.

The removably mountable aspect of the wall 25 in the embodiment of FIG. 4, as well as the embodiments of FIG. 3 and of FIG. 5, is to provide for ease of cleaning, and maintenance and repair of the heat exchange coil 36, 136, 236 and other components at the interior space 34, 134, 234 of the housing 24, 124, 224.

Referring to FIG. 5, the apparatus 210 includes housing 224 with a single wall 242 separating the interior space 234 into chambers 248, 250 for which the chamber 248 is the primary chamber. Similar to that which is shown in FIG. 4, wall 225 is removably mountable to the sidewalls 230, 232 as is represented by the broken lines 255, 257.

Another embodiment of the apparatus 10, 110, 210 includes a portion of the heat exchange coil 36, 136, 236, extending to function as, for example, the walls 42, 44. In such construction, the cryogen would also flow through that extended portion. In effect, the heat exchange coil 36 and the walls 42, 44 would be integrally formed. The embodiments of FIG. 4 and of FIG. 5 could also be similarly constructed and function accordingly.

The fans 52 to 56 can be activated and/or deactivated concurrently or at different times with respect to each other in order to match a flow rate of the cryogen passing through the heat exchange coil 36, 136, 236, or dependent upon a temperature of the cargo area sensed by the temperature probe 70, 170, 270 being contacted by the air flow 35, 135, 235.

Regardless of the apparatus 10, 110, 210 used, the example below shows the efficiency of the construction of the present embodiments and efficient use of the air flows 58 to 62 (158 to 162, 260 to 262) over the heat exchange coils 36, 136, 236.

Using the embodiment of FIG. 3 as an example, the apparatus 10 will match a flow rate of the cryogen, such as LIN, through the heat exchange coil 36 with an air flow necessary to heat and therefore expand the LIN. The apparatus 10 will therefore result in reduced electric current draw, thereby requiring smaller, lighter batteries to operate the apparatus when the engine for the truck upon which the shipping container 12 is mounted is not in operation to provide the electricity.

The primary chamber 48 will be constantly pressurized by the fan 54 (although the fans 52, 56 could also be used) when the apparatus is in operation, which results in the air flow 35 moving over the temperature probe 70 so that a cargo temperature for the space 23 will not be compromised and any temperature variation will be minimized in that space.

Additionally, a minimum amount of the air flow is being used, i. e. only that which is necessary to vaporize the cryogen in the heat exchange coil 36. This may be accomplished by reducing a number of the fans 52 to 56 that are in operation which accordingly translates into a reduced heat load produced because the fewest number of fans are operating.

This accordingly results in greater apparatus and system efficiencies, as there is less heat produced by the fans which needs to be removed by the expanding LIN. The expansion of the LIN being used therefore only needs to remove heat load from the cargo area of the space 23.

The following example is with respect to FIG. 4, and shows the values when comparing a conventional evaporator/heat exchanger with the apparatus 110 embodiment of the present invention.

### Example:

| | conventional (six fans) evaporator | apparatus 110 (four fans) |
|---|---|---|
| current draw-pull down | 30A | 24A |
| current draw-sustain | 15A | 12A |
| air flow-pulldown | 5760m³/h | 7440m³/h |
| air flow-sustain | 5760m³/h | 3720m³/h |
| maximum heat load | 630w | 496w |

As can be seen from the example of above, there is a substantial reduction in the current required and the corresponding heat load produced when comparing the apparatus of the present embodiments with a conventional evaporator. That is, the apparatus 110 only requires four fans, whereas the conventional evaporator would require six fans for a similar heat exchange operation.

The result is that the apparatus 110 requires less electrical current draw and it also increases air flow while at the same time having a lower heat load. The size of the apparatus 110 can therefore be scaled down by using the embodiments of FIG. 3 and of FIG. 5 while still obtaining a commensurate reduction in electrical current draw and heat load with an increase in air flow pulled down when compared to a similarly sized conventional evaporator.

It will be understood that the embodiments described herein are merely exemplary, and that one skilled in the art may make variations and modifications without departing from the spirit and scope of the invention. All such variations and modifications are intended to be included within the scope of the invention as described and claimed herein. Further, all embodiments disclosed are not necessarily in the alternative, as various embodiments of the invention may be combined to provide the desired result.

### List of reference numerals

- 10: apparatus, in particular heat exchange apparatus, for example air flow management heat exchanger apparatus (cf. FIG. 1 to FIG. 3)
- 110: apparatus, in particular heat exchange apparatus, for example air flow management heat exchanger apparatus (cf. FIG. 4)
- 210: apparatus, in particular heat exchange apparatus, for example air flow management heat exchanger apparatus (cf. FIG. 5)
- 12: container, in particular shipping container, for example for perishable goods
- 14: tank or vessel
- 16: carriage
- 18: controller
- 20: first pipe, in particular "liquid in" pipe
- 21: discharge outlet, in particular exhaust outlet, of second pipe 22
- 22: second pipe, in particular "gas out" pipe
- 23: space of container 12
- 24: housing of apparatus 10 (cf. FIG. 1 to FIG. 3)
- 124: housing of apparatus 110 (cf. FIG. 4)
- 224: housing of apparatus 210 (cf. FIG. 5)
- 25: wall for supporting fans 152, 154, 156 removed from housing 124 (cf. FIG. 4)
- 225: wall for supporting fans 254, 256 removed from housing 224 (cf. FIG. 5)
- 26: top of housing 24 (cf. FIG. 1 to FIG. 3)
- 126: top of housing 124 (cf. FIG. 4)
- 226: top of housing 224 (cf. FIG. 5)
- 28: bottom of housing 24 (cf. FIG. 1 to FIG. 3)
- 128: bottom of housing 124 (cf. FIG. 4)
- 228: bottom of housing 224 (cf. FIG. 5)
- 30: first sidewall of housing 24 (cf. FIG. 1 to FIG. 3)
- 130: first sidewall of housing 124 (cf. FIG. 4)
- 230: first sidewall of housing 224 (cf. FIG. 5)
- 32: second sidewall of housing 24 (cf. FIG. 1 to FIG. 3)
- 132: second sidewall of housing 124 (cf. FIG. 4)
- 232: second sidewall of housing 224 (cf. FIG. 5)
- 34: interior space of housing 24 (cf. FIG. 1 to FIG. 3)
- 134: interior space of housing 124 (cf. FIG. 4)
- 234: interior space of housing 224 (cf. FIG. 5)
- 35: air flow external to apparatus 10 (cf. FIG. 1 to FIG. 3)
- 135: air flow external to apparatus 110 (cf. FIG. 4)
- 235: air flow external to apparatus 210 (cf. FIG. 5)
- 36: heat exchange coil (cf. FIG. 1 to FIG. 3)
- 136: heat exchange coil (cf. FIG. 4)
- 236: heat exchange coil (cf. FIG. 5)
- 38: inlet of heat exchange coil 36 (cf. FIG. 1 to FIG. 3)
- 40: outlet of heat exchange coil 36 (cf. FIG. 1 to FIG. 3)
- 42: first wall at interior space 34 (cf. FIG. 1 to FIG. 3)
- 142: first wall at interior space 134 (cf. FIG. 4)
- 242: wall at interior space 234 (cf. FIG. 5)
- 43: additional wall to separate or segregate primary chamber 148 into plurality of chambers 148a, 148b (cf. FIG. 4)
- 44: second wall at interior space 34 (cf. FIG. 1 to FIG. 3)
- 144: second wall at interior space 134 (cf. FIG. 4)
- 46: third chamber (cf. FIG. 1 to FIG. 3)
- 146: third chamber (cf. FIG. 4)
- 48: primary chamber, in particular primary plenum chamber (cf. FIG. 1 to FIG. 3)
- 148(a, b): primary chamber, in particular primary plenum chamber (cf. FIG. 4)
- 248: primary chamber, in particular primary plenum chamber (cf. FIG. 5)
- 50: second chamber (cf. FIG. 1 to FIG. 3)
- 150: second chamber (cf. FIG. 4)
- 250: second chamber (cf. FIG. 5)
- 52: third fan, in particular third axial fan, for example third axial flow fan (cf. FIG. 1 to FIG. 3)
- 152: third fan, in particular third axial fan, for example third axial flow fan (cf. FIG. 4)
- 53: additional fan, in particular additional axial fan, for example additional axial flow fan (cf. FIG. 4)
- 54: primary fan, in particular primary axial fan, for example primary axial flow fan (cf. FIG. 1 to FIG. 3)
- 154: primary fan, in particular primary axial fan, for example primary axial flow fan (cf. FIG. 4)
- 254: primary fan, in particular primary axial fan, for example primary axial flow fan (cf. FIG. 5)
- 55: coaction between first sidewall 130 and wall 25 (cf. FIG. 4)
- 255: coaction between first sidewall 230 and wall 225 (cf. FIG. 5)
- 56: second fan, in particular second axial fan, for example second axial flow fan (cf. FIG. 1 to FIG. 3)
- 156: second fan, in particular second axial fan, for example second axial flow fan (cf. FIG. 4)
- 256: second fan, in particular second axial fan, for example second axial flow fan (cf. FIG. 5)
- 57: coaction between second sidewall 132 and wall 25 (cf. FIG. 4)
- 257: coaction between second sidewall 232 and wall 225 (cf. FIG. 5)
- 58: air flow through third chamber 46 and over heat exchange coil 36 (cf. FIG. 1 to FIG. 3)
- 158: air flow through third chamber 146 and over heat exchange coil 136 (cf. FIG. 4)
- 60: air flow through primary chamber 48 and over heat exchange coil 36 (cf. FIG. 1 to FIG. 3)
- 160: air flow through primary chamber 148(a, b) and over heat exchange coil 136 (cf. FIG. 4)
- 260: air flow through primary chamber 248 and over heat exchange coil 236 (cf. FIG. 5)
- 62: air flow through second chamber 50 and over heat exchange coil 36 (cf. FIG. 1 to FIG. 3)
- 162: air flow through second chamber 150 and over heat exchange coil 136 (cf. FIG. 4)
- 262: air flow through second chamber 250 and over heat exchange coil 236 (cf. FIG. 5)
- 64: cooled third air flow, in particular cooler than air flow 58 (cf. FIG. 1 to FIG. 3)
- 164: cooled third air flow, in particular cooler than air flow 158 (cf. FIG. 4)
- 66: cooled primary air flow, in particular cooler than air flow 60 (cf. FIG. 1 to FIG. 3)
- 166: cooled primary air flow, in particular cooler than air flow 160 (cf. FIG. 4)
- 266: cooled primary air flow, in particular cooler than air flow 260 (cf. FIG. 5)
- 68: cooled second air flow, in particular cooler than air flow 62 (cf. FIG. 1 to FIG. 3)
- 168: cooled second air flow, in particular cooler than air flow 162 (cf. FIG. 4)
- 268: cooled second air flow, in particular cooler than air flow 262 (cf. FIG. 5)
- 70: temperature probe or sensor, in particular in primary chamber 48 (cf. FIG. 1 to FIG. 3)
- 170: temperature probe or sensor, in particular in primary chamber 148(a) (cf. FIG. 4)
- 71: additional temperature probe or sensor, in particular in primary chamber 148(b) (cf. FIG. 4)
- 270: temperature probe or sensor, in particular in primary chamber 248 (cf. FIG. 5)

## Claims

1. A heat exchange apparatus (10; 110; 210), comprising:
- a housing (24; 124; 224) including an inlet, an outlet downstream of the inlet, and a space (34; 134; 234) between the inlet and the outlet;
- a heat exchange coil (36; 136; 236) disposed at the space (34; 134; 234) and through which a cryogen flows for evaporation;
- at least one wall (42, 44; 142, 144; 242) mounted in the space (34; 134; 234) to separate said space (34; 134; 234) into a pair of chambers (48, 50, 46; 148[a, b], 150, 146; 248, 250), each one of said chambers (48, 50, 46; 148[a, b], 150, 146; 248, 250) separate and discrete from the other one of said pair; and
- a first fan (54; 154; 254) disposed to coact with one of said pair of chambers (48, 50, 46; 148[a, b], 150, 146; 248, 250) to provide air flow (60; 160; 260) from the inlet over the heat exchange coil (36; 136; 236) to the outlet.

2. The apparatus according to claim 1, wherein the at least one wall (42, 44; 142, 144; 242) extends continuously along the space (34; 134; 234) from said inlet to said heat exchange coil (36; 136; 236).

3. The apparatus according to claim 1 or 2, further comprising a second fan (56; 156; 256) disposed to coact with another of said chambers (48, 50, 46; 148[a, b], 150, 146; 248, 250) to provide another air flow (62; 162; 262) from the inlet over the heat exchange coil (36; 136; 236) to the outlet, said another air flow (62; 162; 262) separate and discrete from the air flow (60; 160; 260), wherein the first fan (54; 154; 254) and the second fan (56; 156; 256) can optionally be operable concurrently or at separately different intervals of time.

4. The apparatus according to at least one of claims 1 to 3, wherein the at least one wall (42, 44; 142, 144; 242) comprises a portion of the heat exchange coil (36; 136; 236), wherein said cryogen flows through said portion.

5. The apparatus according to at least one of claims 1 to 4, wherein the housing (24; 124; 224) further comprises a sidewall (30, 32; 130, 132; 230, 232) constructed and arranged to support the first fan (54; 154; 254), said sidewall (30, 32; 130, 132; 230, 232) in particular constructed to be removably mounted to the housing (24; 124; 224) at said inlet.

6. The apparatus according to at least one of claims 1 to 5, wherein the cryogen comprises a cryogenic substance selected from the group consisting of liquid nitrogen (LIN), liquefied natural gas (LNG), argon (Ar), and carbon dioxide (CO₂).

7. The apparatus according to at least one of claims 1 to 6, further comprising a discharge outlet (21) having an end in fluid communication with the heat exchange coil (36; 136; 236) and an opposed end in fluid communication with atmosphere external to the housing (24; 124; 224).

8. A method of evaporating a cryogen to cool a space (34; 134; 234), comprising:
- providing the space (34; 134; 234) with a plurality of flow paths to a heat exchange coil (36; 136; 236) through which the cryogen passes;
- separating (42, 44; 142, 144; 242) the space (34; 134; 234) such that the plurality of flow paths are separate and discrete from each other, and are not in fluid communication with each other;
- moving an air flow (60, 62, 58; 160, 162, 158; 260, 262) in each of the plurality of flow paths to contact the heat exchange coil (36; 136; 236);
- vaporizing or evaporating the cryogen in the heat exchange coil (36; 136; 236) upon contact with the air flow (60, 62, 58; 160, 162, 158; 260, 262); and
- exhausting a cooler air flow (66, 68, 64; 166, 168, 164; 266, 268) from the heat exchange coil (36; 136; 236).

9. The method according to claim 8, wherein the separating (42, 44; 142, 144; 242) the space (34; 134; 234) comprises extending a portion of the heat exchange coil (36; 136; 236) along said space (34; 134; 234) for providing the plurality of flow paths.

10. The method according to claim 8 or 9, wherein the moving the air flow (60, 62, 58; 160, 162, 158; 260, 262) occurs concurrently in the plurality of flow paths.

11. The method according to at least one of claims 8 to 10, wherein the moving the air flow (60, 62, 58; 160, 162, 158; 260, 262) corresponds to the vaporizing of the cryogen needed for exhausting the cooler air flow (66, 68, 64; 166, 168, 164; 266, 268).

12. The method according to at least one of claims 8 to 11, wherein the exhausting the cooler air flow (66, 68, 64; 166, 168, 164; 266, 268) is into a container (12), in particular into a shipping container, for example for perishable goods.

13. The method according to at least one of claims 8 to 12, wherein the cryogen comprises a cryogenic substance selected from the group consisting of liquid nitrogen (LIN), liquefied natural gas (LNG), argon (Ar), and carbon dioxide (CO₂).

14. The method according to at least one of claims 8 to 13, further comprising discharging (21) vaporized cryogen downstream from the heat exchange coil (36; 136; 236), said discharging (21) being in particular to atmosphere external to the space (34; 134; 234).

15. The method according to at least one of claims 8 to 14, further comprising recirculating the cryogen not having been vaporized to the heat exchange coil (36; 136; 236).
